# EUROPEAN PATENT APPLICATION

(11) **EP 2 602 782 A1**
(43) Date of publication of application: **12.06.2013**
(21) Application number: 11192637.4
(22) Date of filing: 08.12.2011
(51) Int. Cl.: G09G 3/20

(54) **Display system**

(71) Applicant: Johnson Controls Automotive Electronics SAS, 95892 Cergy-Pontoise Cedex (FR)
(72) Inventor: Cotty, Michel, 78970 Mézières-sur-seine (FR); Rawer, Marc, 70327 Stuttgart (DE); Daurelle, Jean-Yves, 75008 Paris (FR)
(74) Representative: Liedtke, Markus

(57) **Abstract**

The invention relates to a display system (1) for a vehicle, comprising a display module (2) and a connectivity module (3) connected by an interface (4), wherein the connectivity module (3) is arranged to transmit video data to be displayed (V) via the interface (4) to the display module (2), wherein a microprocessor (3.1) arranged in the connectivity module (3) is adapted to embed remote control data packets (RC) in the video data to be displayed (V) thereby remotely controlling the display module (2). The invention also relates to a method for operating the display system (1).

## Description

The invention relates to a display system for a vehicle and to a method for operating the display system.

Most modern cars have one or more displays arranged in a dashboard for displaying GPS information and video content, wherein the display may also serve as a user interface.

US 4,787,040 A discloses an advanced display system controller for use in automotive vehicles. The display system is of the type comprising a display unit for displaying graphics and text to an operator of the vehicle, touch switch entry means for entry of desired function information by the operator and generation of touch input signals, discrete switch entry means for entry of additional function information by the operator and generation of discrete signals, and a display controller for controlling the display system operations by selective partitioning of system functions. The display controller comprises an input/output (I/O) channel, an interprocessor data link for transferring data and commands between data processors, a master microprocessor for issuing control signals and responding to control signals representative of selected system functions, storage means associated with the master microprocessor for storing master data and commands and a master control program to control master functions in the system, the master functions including control of graphics and text for display on the display unit in response to the touch switch means and the discrete switch means, and a slave microprocessor for issuing and responding to control and data signals involving communication with the master microprocessor via the input/output channel and the interprocessor data link,; and storage means associated with the slave microprocessor for storing slave data and commands and a slave control program to control slave functions in the system, the slave functions including control and monitoring of communications internally within the display controller and externally by the display controller.

It is an object of the present invention to provide an improved display system for a vehicle. It is another object of the invention to provide an improved method for operating a display system for a vehicle.

The object is achieved by a display system according to claim 1 and by a method for operating a display system according to claim 12.

Preferred embodiments of the invention are given in the dependent claims.

According to the invention a display system for a vehicle comprises a display module and a connectivity module connected by an interface. The connectivity module is arranged to transmit video data to be displayed via the interface to the display module. A microprocessor is arranged in the connectivity module and adapted to embed remote control data packets in the video data to be displayed thereby remotely controlling the display module. Thus, the calculating power of the microprocessor of the connectivity module is shared between the connectivity module and the display module. Hence, the display module can be embodied without a dedicated, extra microprocessor.

Instead, the display module may comprise rather simple circuitry for encoding and/or decoding received data and/or data to be transmitted.

The interface may be a low voltage differential signalling interface. LVDS is an inexpensive digital signalling system which can run at relatively high speeds over twisted-pair cables.

The remote control data packets embedded in the video data may have a serial communication format, in particular according to one of the standards UART or I2C.

The display module may comprise a display unit arranged as a thin film transistor display. Any other kind of display may likewise be applied.

The display module may comprise an input unit for allowing a user input. Thus, the display module may be used as an interactive human machine interface.

The input unit may be arranged as a touch panel arranged on the display unit. This allows for a very intuitive interaction, e.g. by displaying virtual buttons and other control elements which can be touched by the user for operating them.

The communication on the interface may be unidirectional for transmitting data from the connectivity module to the display module. Likewise, in an exemplary embodiment the communication on the interface may be bidirectional allowing the display module to communicate its status or data received from the input unit to the connectivity module.

The display module may be part of a vehicle, e.g. embedded in a dashboard of the vehicle.

The display module and/or the connectivity module may be connected to a CAN-Bus of the vehicle for transmitting and/or receiving CAN commands.

Another aspect of the invention relates to a method for operating a display system for a vehicle, comprising a display module and a connectivity module connected by an interface. According to the method the connectivity module transmits video data to be displayed via the interface to the display module, wherein a microprocessor arranged in the connectivity module embeds remote control data packets in the video data to be displayed thereby remotely controlling the display module.

Thus, the calculating power of the microprocessor of the connectivity module is shared between the connectivity module and the display module. Hence, the display module can be embodied without a dedicated, extra microprocessor.

Instead the remote control data packets may be decoded by circuitry in the display module. According to the content of the control data packets the circuitry can control the display module, e.g. by starting and/or stopping the display.

The circuitry may also be arranged to encode data for transmitting it over the interface to the connectivity module, e.g. data received from the input unit.

The video data to be displayed over the interface may be low voltage differential signalling data, wherein the control data packets embedded in the video data to be displayed may have a serial communication format, in particular according to one of the standards UART or I2C.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given hereinbelow and the accompanying drawings which are given by way of illustration only, and thus, are not limitive of the present invention, and wherein:

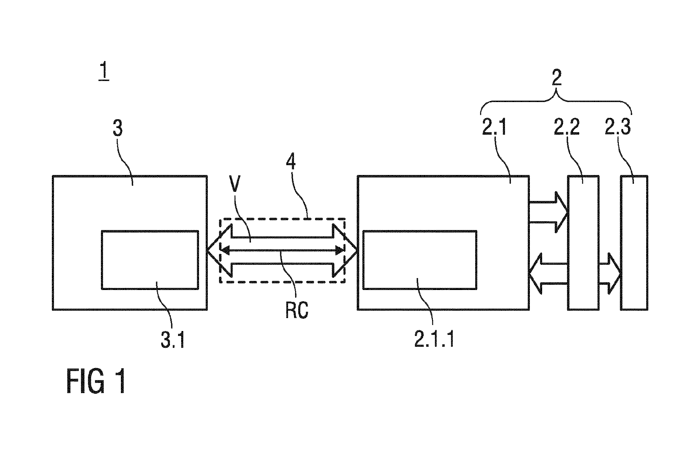

- Figure 1: is a schematic view of a display module and a connectivity module for a vehicle.

### Detailed Description of Preferred Embodiments

**Figure 1** is a schematic view of a display system 1 comprising a display module 2 and a connectivity module 3 for a vehicle.

The display module 2 comprises a control unit 2.1, a display unit 2.2 and an input unit 2.3. The display unit 2.2 may be arranged as a TFT-display. The input unit 2.3 may be embodied as a touch panel arranged on the display unit 2.2. The control unit 2.1 may comprise circuitry 2.1.1 for decoding data to be displayed by the display unit 2.2 and for encoding data provided by the input unit 2.3.

The connectivity module 3 comprises a microprocessor 3.1.

The display module 2 is connected to the connectivity module 3 via an interface 4, e.g. a low voltage differential signalling interface (LVDS). The connectivity module 3 transmits video data V to be displayed via the interface 4 to the display module 2.

The microprocessor 3.1 embeds remote control data packets RC in the video data V. The remote control data packets RC are decoded in the control unit 2.1 of the display module 2 and used to control the display module 2, in particular the circuitry 2.1.1, e. g. for starting or stopping the display. Thus, the calculating power of the microprocessor 3.1 of the connectivity module 3 is shared between the connectivity module 3 and the display module 2. Hence, the display module 2 can be embodied without a dedicated, extra microprocessor.

The remote control data packets RC may have a serial communication format such as according to one of the standards UART or I2C.

The communication on the interface 4 may be unidirectional for transmitting data from the connectivity module 3 to the display module 2. In an exemplary embodiment the communication on the interface 4 may be bidirectional allowing the display module 2 to communicate its status or data received from the input unit 2.3 to the connectivity module 3.

The display module 2 may be embedded in a dashboard of a vehicle.

The display module 2 and/or the connectivity module 3 may be connected to a CAN-Bus of the vehicle for transmitting and/or receiving CAN commands.

### List of References

- 1: display system
- 2: display module
- 2.1: control unit
- 2.1.1: circuitry
- 2.2: display unit
- 2.3: input unit
- 3: connectivity module
- 3.1: microprocessor
- 4: interface
- RC: remote control data packet
- V: video data

## Claims

1. Display system (1) for a vehicle, comprising a display module (2) and a connectivity module (3) connected by an interface (4), wherein the connectivity module (3) is arranged to transmit video data to be displayed (V) via the interface (4) to the display module (2), wherein a microprocessor (3.1) arranged in the connectivity module (3) is adapted to embed remote control data packets (RC) in the video data to be displayed (V) thereby remotely controlling the display module (2).

2. Display system (1) according to claim 1, **characterized in that** the display module (2) comprises circuitry (2.1.1) for encoding and/or decoding received data and/or data to be transmitted, wherein the display module (2) does not comprise a microprocessor.

3. Display system (1) according to one of the claims 1 or 2, **characterized in that** the interface (4) is a low voltage differential signalling interface.

4. Display system (1) according to one of the preceding claims, **characterized in that** the remote control data packets (RC) have a serial communication format, in particular according to one of the standards UART or I2C.

5. Display system (1) according to one of the preceding claims, **characterized in that** the display module (2) comprises a display unit (2.2) arranged as a thin film transistor display.

6. Display system (1) according to one of the preceding claims, **characterized in that** the display module (2) comprises an input unit (2.3) for allowing a user input.

7. Display system (1) according to claim 6, **characterized in that** the input unit (2.3) is a touch panel arranged on the display unit (2.2).

8. Display system (1) according to one of the preceding claims, **characterized in that** the interface (4) is arranged for unidirectional communication.

9. Display system (1) according to one of the claims 1 to 7, **characterized in that** the interface (4) is arranged for bidirectional communication.

10. Vehicle comprising a display system (1) according to one of the preceding claims.

11. Vehicle according to claim 10, **characterized by** a CAN-Bus arranged in the vehicle, wherein the display module (2) and/or the connectivity module (3) are connected to the CAN-Bus for transmitting and/or receiving CAN commands.

12. Method for operating a display system (1) for a vehicle, comprising a display module (2) and a connectivity module (3) connected by an interface (4), wherein the connectivity module (3) transmits video data to be displayed (V) via the interface (4) to the display module (2), wherein a microprocessor (3.1) arranged in the connectivity module (3) embeds remote control data packets (RC) in the video data to be displayed (V) thereby remotely controlling the display module (2).

13. Method according to claim 12, **characterized in that** the remote control data packets (RC) are decoded by circuitry (2.1.1) in the display module (2) and used for starting and/or stopping the display.

14. Method according to claim 13, **characterized in that** the circuitry (2.1.1) is arranged to encode data for transmitting it over the interface (4) to the connectivity module (3).

15. Method according to one of the claims 12 to 14, **characterized in that** the video data to be displayed (V) over the interface (4) are low voltage differential signalling data, wherein the control data packets (RC) embedded in the video data to be displayed (V) have a serial communication format, in particular according to one of the standards UART or I2C.
